# FASCICULE DE BREVET EUROPEEN

(11) **EP 1 201 888 B1**
(45) Date de publication et mention de la délivrance du brevet: **19.05.2004**
(21) Numéro de dépôt: 01402752.8
(22) Date de dépôt: 24.10.2001
(51) Int. Cl.: F01N 9/00, F01N 3/023, F02D 41/02, F02M 25/07, F02D 21/08, F01N 3/28

(54) **Procédé et système pour controler la température de régénération d'un filtre à particules placé à l'échappement d'un moteur thermique**
Verfahren und eine in der Abgasanlage eines Verbrennungsmotors enthaltene Vorrichtung, zur Steuerung der Regenerationstemperatur eines Partikelfilters
System and method for monitoring a particulate filter regeneration temperature within the exhaust line of an internal combustion engine

(30) Priorité: 25.10.2000 FR 0013781
(43) Date de publication de la demande: 02.05.2002
(73) Titulaire: Institut Français du Pétrole, 92852 Rueil-Malmaison Cedex (FR)
(72) Inventeur: Achour, Louiza, 42000 Saint-Etienne (FR); Pajot, Olivier, 78410 Aubergenville (FR); Bouchez, Matthias, 92190 Meudon (FR); Dementhon, Jean-Baptiste, 75011 Paris (FR)

(56) Documents cités:
- US-A- 4 331 454
- US-A- 5 067 973
- PATENT ABSTRACTS OF JAPAN vol. 010, no. 029 (M-451), 5 février 1986 (1986-02-05) & JP 60 184918 A (MITSUBISHI JIDOSHA KOGYO KK), 20 septembre 1985 (1985-09-20)
- PATENT ABSTRACTS OF JAPAN vol. 011, no. 397 (M-655), 25 décembre 1987 (1987-12-25) & JP 62 162762 A (TOYOTA MOTOR CORP), 18 juillet 1987 (1987-07-18)

## Description

La présente invention concerne un procédé et un système de filtration à régénération périodique pour filtrer des gaz chargés de particules. Le système selon l'invention peut être utilisé dans une ligne d'échappement d'un moteur thermique, de type diesel par exemple, pour retenir et éliminer les particules polluantes transportées par les gaz, en évitant par là leur rejet dans l'atmosphère.

### Etat de la technique

Les systèmes de filtration permettent de recueillir les particules émises à l'échappement d'un moteur à combustion interne avec une efficacité de filtration importante, de l'ordre de 90%. A titre illustratif, peuvent être cités le monolithe céramique à effet « wall-flow » à base de cordiérite commercialisé par la société Corning EX66 ou le monolithe céramique en carbure de silicium commercialisé par la société Ibiden.

Placé à l'échappement moteur, le filtre à particules diesel permet de collecter les particules par le passage des gaz d'échappement. La difficulté technique rencontrée pour le développement et l'implantation des filtres à particules est qu'ils doivent être périodiquement régénérés par combustion du dépôt de suie afin d'éviter un colmatage de l'élément filtrant qui serait pénalisant sur le rendement du moteur et mettrait en péril son bon fonctionnement. Cette combustion se produit parfois naturellement lorsque la température des gaz qui traversent le filtre atteint un niveau suffisant pour initier l'oxydation des particules. Cependant les niveaux de température rencontrés à l'échappement des moteurs Diesel par exemple restent, sur une très grande plage de fonctionnement, bien trop faibles pour permettre l'initiation de la combustion des suies. Il est alors nécessaire de mettre en oeuvre des actions extérieures permettant de déclencher la régénération du filtre.

De nombreuses techniques ont été développées dans ce sens. Elles peuvent être basées sur des modifications des paramètres du fonctionnement du moteur tels que le taux d'EGR, la suralimentation, le retard de l'injection, le vannage à l'échappement ou à l'admission, elles peuvent être liées également à l'utilisation d'un catalyseur d'oxydation placé en amont de l'élément filtrant couplé à une post injection de carburant, ou encore, elles peuvent faire intervenir un apport externe d'énergie dans les gaz d'échappement ou au niveau du filtre par le biais de résistance électrique, de brûleur, de micro ondes, de plasma, etc. Il est alors nécessaire de piloter ces différents dispositifs par une commande extérieure prise en charge par le calculateur.

Le critère de déclenchement de la régénération de l'élément filtrant peut être la variation de la contre-pression ou perte de charge mesurée aux bornes de l'élément filtrant qui peut être corrélée à son état d'encrassement par les suies, comme décrit par exemple dans le brevet FR 2.755.623. Ce procédé de détection convient très bien en régime stabilisé. La mesure de la contre-pression permet également de détecter le démarrage de la combustion des suies accumulées dans l'élément filtrant, car, en régime stabilisé, elle chute avec la combustion du dépôt carboné. Cependant, la contre-pression à l'échappement est soumise à d'importantes fluctuations lorsque les conditions moteur ne sont pas stabilisées (température, débit d'air, etc.). C'est le cas pour un moteur de véhicule qui, dans les conditions usuelles de circulation, fonctionne souvent en régime transitoire (accélération, décélération). La maîtrise de l'encrassement d'un élément filtrant en utilisant ce type de mesure est difficile dans la pratique.

Le déclenchement de l'action de régénération de l'élément filtrant peut également être commandé par le biais d'une mesure de la variation de la résistance électrique mesurée entre des points espacés le long de l'élément filtrant, variation qui est directement liée à son état d'encrassement, comme décrit par exemple dans le brevet FR 2.760.531.

La régénération du filtre peut être aussi facilitée par l'utilisation d'additifs dans le carburant à base, par exemple, d'éléments organo-métalliques ou de terres rares, qui se retrouvent dans le dépôt de suies et catalyse l'oxydation des suies ce qui se traduit par un abaissement de la température d'initiation de la combustion du dépôt carboné. Parmi les produits les plus souvent utilisés, on peut citer, le cérium, le strontium, le fer, etc. L'utilisation de ces éléments permettent d'obtenir des régénérations à des températures comprises entre 250°C et 450°C selon la nature du dépôt de suies (et notamment sa teneur en SOF). Cependant les températures rencontrées, par exemple à l'échappement de moteurs Diesel suralimentés, peuvent rester, pour certains types d'utilisation comme les trajets urbains, insuffisantes au déclenchement de la combustion des suies. La mise en oeuvre de stratégies spécifiques faisant appels aux différents éléments déjà cités devient indispensable au bon fonctionnement du système.

Différents exemples d'utilisation de ces différentes techniques sont décrites par exemple dans les brevets suivants : EP 913.559, JP 10141113, GB 2 261 613, EP 488 386, DE 35 38 109 ou JP 60 184 918.

Dans la demande de brevet français précitée 00/02.215 du demandeur, est décrit un dispositif pour contrôler l'accumulation dans un filtre d'une ligne d'échappement, d'un moteur thermique, de particules carbonées ou suies évacuées dans les gaz de combustion, par mesure de la variation de la résistance électrique entre des électrodes d'une sonde, affectée par le dépôt de ces particules.

Par la demande de brevet français EN 00/02.216 du demandeur, on connaît un procédé et un dispositif pour détecter le début de la régénération par le biais d'une mesure de la différence de richesse en amont et en aval du filtre à particules. Ce procédé peut également être utilisé pour savoir si la régénération est bien contrôler par limitation de l'oxygène dans les gaz.

Lorsque la température d'initiation de la combustion des suies est atteinte, la régénération démarre et la température s'élève jusqu'à dépasser la température maximale prévue que le filtre peut supporter sans dommage. Celle-ci dépend de l'état de chargement de l'élément filtrant.

Quel que soit le moyen utilisé pour déclencher la régénération de l'élément filtrant, celle-ci doit être parfaitement maîtrisée, c'est à dire rapide, complète en optimisant l'apport d'énergie, sans toutefois entraîner de détérioration du filtre par surchauffe. Une bonne gestion du système passe par le contrôle de la phase de régénération. Il est donc indispensable de développer des stratégies de contrôle automatique de la régénération du filtre et ainsi limiter les gradients thermiques engendrés à cette occasion. Plus précisément, la détection du début de régénération du filtre permet de définir le moment où les moyens mis en oeuvre pour augmenter la température des gaz peuvent être stoppés. La combustion des suies peut alors s'auto-entretenir en raison de la forte exothermicité de la réaction d'oxydation des suies. Cela se traduit, notamment par une limitation de la surconsommation du moteur lié à la mise en oeuvre des stratégies de régénération de l'élément filtrant.

### Le procédé et le dispositif selon l'invention

Le procédé selon l'invention s'inscrit dans le cadre d'une action de régénération de filtres à particules par combustion, en agissant sur des moyens mis en oeuvre pour augmenter la température des gaz, en utilisant comme paramètres de contrôle, la différence de pression mesurée aux bornes du filtre due à la disparition de la couche de particules lorsque la régénération est amorcée, et simultanément, la température en aval du filtre qui croît brusquement.

L'idée à la base du procédé, est d'utiliser les techniques connues de contrôle des moteurs pour limiter les dégagements de chaleur dus à la combustion dans le filtre à particules lorsque la température des gaz dépasse un certain seuil prédéterminé.

Le procédé selon l'invention permet donc de contrôler la régénération périodique d'un filtre à particules placé à l'échappement d'un moteur thermique, de type diesel par exemple, par combustion des particules retenues dans le filtre, comprenant une mesure de la température régnant dans le filtre à particules et une modulation du taux résiduel d'oxygène dans les gaz d'échappement pour que la température d'incinération mesurée ne dépasse pas un plafond défini, dépendant de la résistance thermique du filtre à particules de manière à limiter sa dégradation, caractérisé en ce qu'on élargit la section de passage des gaz brûlés dans le filtre à particules par un élément diffuseur disposé en tête dudit filtre, ce qui a pour effet d'étaler le flux de gaz brûlés sur toute sa section transversale et de l'homogénéiser, en ce qu'on module le taux résiduel d'oxygène dans les gaz d'échappement en agissant périodiquement sur le taux de gaz brûlés recyclés à l'admission du moteur par un circuit de recirculation ajustable des gaz brûlés et sur des basculements périodiques de richesse à l'admission dudit moteur.

Le système selon l'invention permet de contrôler la régénération périodique d'un filtre à particules placé à l'échappement d'un moteur thermique, de type diesel par exemple, par incinération des particules retenues dans le filtre, comportant au moins une sonde pour mesurer la température régnant en un point du filtre à particules, des moyens de chauffage des gaz brûlés et des moyens de contrôle pour moduler le taux résiduel d'oxygène dans les gaz d'échappement pour que la température d'incinération mesurée ne dépasse pas un plafond défini, dépendant de la résistance thermique du filtre à particules, de manière à limiter sa dégradation, caractérisé en ce qu'il comporte un élément diffuseur disposé en tête du filtre à particules pour élargir la section de passage des gaz brûlés dans ledit filtre, pour limiter l'incidence de ladite modulation du taux résiduel d'oxygène sur l'efficacité de la régénération du filtre, en ce que les moyens de contrôle comportent un calculateur adapté à moduler l'ouverture d'une vanne de recirculation de gaz brûlés, associée à un circuit de recirculation ajustable des gaz brûlés à l'admission du moteur, et à moduler la richesse de combustion à l'admission dudit moteur.

### Présentation sommaire des figures

D'autres caractéristiques et avantages du procédé et du dispositif selon l'invention, apparaîtront à la lecture de la description ci-après d'un exemple non limitatif de réalisation, en se référant aux dessins annexés où :
- la Fig. est un schéma du dispositif global sur lequel a été réalisé de l'invention ;
- les Fig. 2A, 2B montrent schématiquement un filtre avec son diffuseur en tête;
- la Fig.3 montre schématiquement le système de contrôle selon l'invention ;
- les Fig.4A, 4B montrent des courbes illustrant les températures mesurées en amont (A) et en aval (B) d'un filtre sans contrôle de température (Fig.4A) et avec contrôle de la température ;
- les Fig.5A, 5B montrent schématiquement qu'un filtre avec un diffuseur en tête du filtre à particules (Fig.5B) est mieux régénéré qu'un même filtre sans diffuseur, toutes choses égales par ailleurs ; et
- la Fig.6 est un organigramme simplifié permettant la mise en oeuvre du mode de réalisation du contrôle de la température durant la régénération.

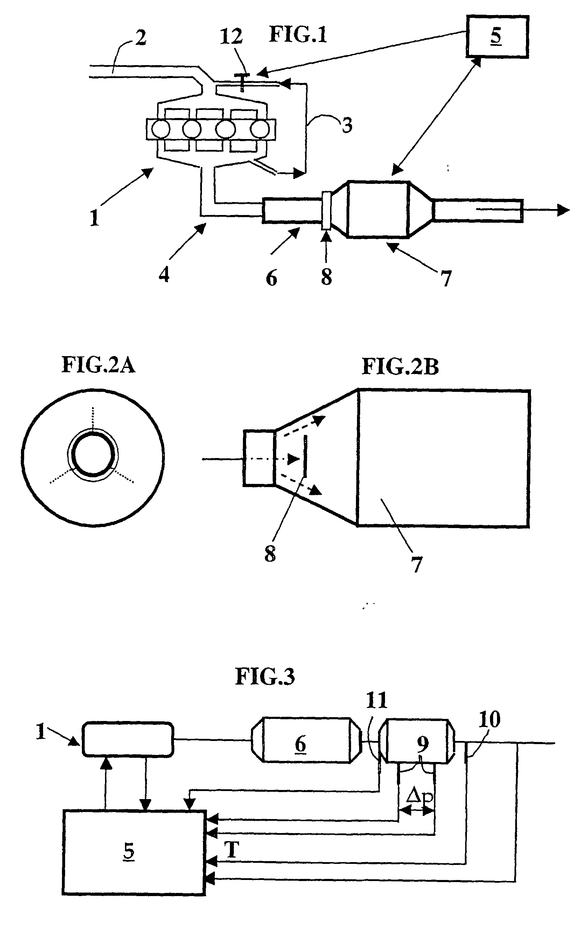

Sur la Fig.1, est schématisé un moteur 1 par exemple de type injection directe sous haute pression à haute précision avec rampe commune dit "common-rail", avec un circuit 2 d'admission des gaz, un circuit 3 de recirculation contrôlée des gaz d'échappement (EGR), un circuit 4 d'échappement des gaz brûlés et un calculateur de contrôle 5. Le circuit d'échappement 4 comprend un élément de chauffage des gaz d'échappement 6 tel qu'un catalyseur d'oxydation par exemple, suivi d'un filtre à particules 7. En tête de ce filtre 7, est placé un diffuseur 8 (Fig. 2A, 2B). Il est adapté à homogénéiser le flux des gaz qui a pour effet de rendre plus complète la combustion des particules qui sont retenues dans le filtre. L'élément de chauffage 6 est facultatif. Le chauffage des gaz peut être assuré suivant une technique connue par une modification du réglage du moteur tendant à augmenter leur température.

Les données permettant de détecter l'état du filtre à particules 7 à tout instant sont fournies (Fig.3) par un premier capteur différentiel de pression 9 donnant la mesure de la pression en amont et en aval du filtre à particules 7, au moins une sonde 10 mesurant la température disposée de préférence en aval du filtre à particules et une sonde 11 de détermination de l'encrassement du filtre de particules 7, tel par exemple que celle décrite dans la demande de brevet français précitée 00/02.215. La sonde 11 est placée par exemple en tête du filtre 7. Les capteurs 9 et les sondes 10, 11 sont connectés au calculateur 5 pilotant le fonctionnement du moteur 1. Dans le calculateur 5, sont implémentées les lois de commande permettant de piloter la régénération périodique du filtre à particules 7 en fonction des variations combinées de la température T et de la variation de pression Δ*P*.

La mise en oeuvre des moyens permettant la limitation de la température est déclenchée par le calculateur 5 sur la base des mesures de la température fournies par la ou chaque sonde de température 10. Le contrôle sur la température maximale de combustion des suies, est effectué par action sur une vanne 12 interposée sur le circuit EGR 3 pour moduler suivant une loi de type PI (Proportionnel-Intégral), le taux de recirculation des gaz brûlés dans les circuits d'admission 2. En augmentant ce taux, on diminue fortement la quantité d'air frais à l'admission ce qui a pour effet d'abaisser le taux résiduel d'oxygène dans les gaz brûlés et par conséquent de réduire l'oxydation des particules. La température de combustion a donc tendance à diminuer. Suivant un mode particulier de mise en oeuvre, le calculateur 5 peut modifier par exemple le signal de commande RCO (Rapport Cyclique d'Ouverture) qui agit sur l'ouverture de la vanne EGR. Sur un intervalle de temps bref, la teneur en oxygène est très faible. La combustion suit son cours, de manière plus lente mais demeure toujours complète.

Cependant, on a pu vérifier que l'efficacité de la régénération du filtre n'en était pas affectée, du fait du diffuseur 8 placé en tête du filtre à particules 7 qui a pour effet d'étaler le flux de gaz brûlés sur toute sa surface et de l'homogénéiser.

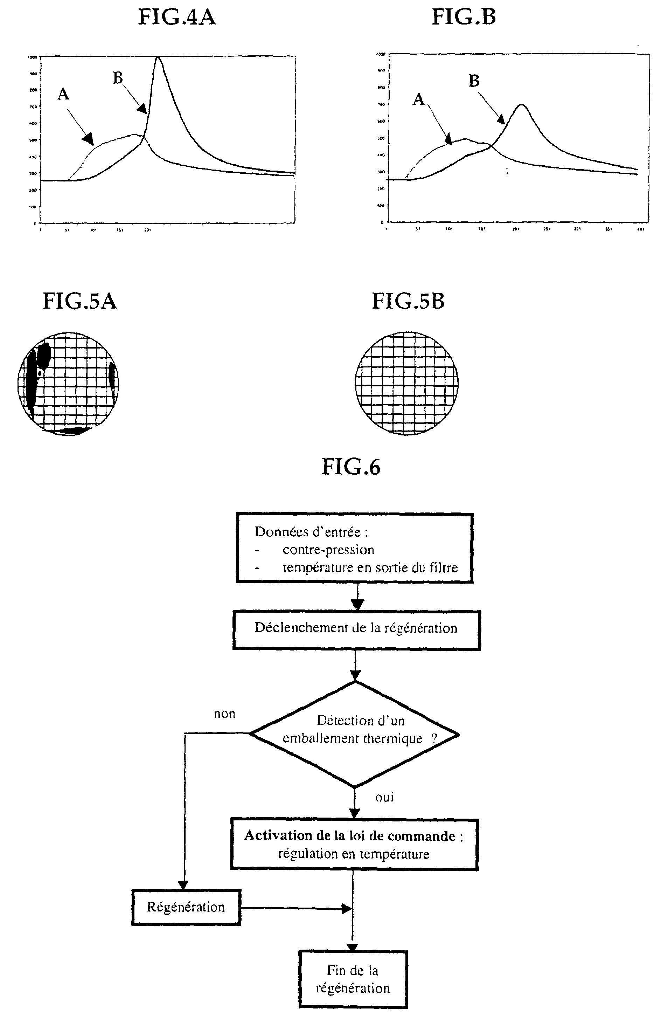

Les figures 4A, 4B présentent des résultats de mesure de la température en amont (courbe A obtenue au moyen d'une deuxième sonde 10) et en aval (courbe B) du filtre à particules 7 lors de la régénération. La figure 4A correspond à une régénération classique sans action limitative sur la température de combustion. On voit que la température au sein du filtre atteint dans ce cas là environ 1000° C. Cette température est assez élevée et dépend étroitement du niveau d'encrassement du filtre. Elle peut dépasser largement cette valeur et endommager le filtre.

La figure 4B correspond à une régénération avec activation de la loi de commande visant à une diminution partielle de la teneur en oxygène dans les gaz. La température maximale au sein du filtre à particules 7 est de l'ordre de 700° C seulement, ce qui présente un avantage évident pour la longévité du filtre en comparaison du cas de la figure 4A.

L'algorithme de contrôle de la température de combustion des suies est indiqué à la figure 6. La mesure de la contre-pression Δ*P* indique l'état d'encrassement du filtre et sert de référence pour le déclenchement de la régénération par augmentation de la température suivant un procédé connu comme indiqué par exemple dans la demande de brevet français EN 00/02.216 précitée par exemple.

La température T mesurée de préférence en sortie du filtre 7, est utilisée comme paramètre d'entrée pour le calculateur 5 chargé d'activer la loi de commande. Cette température est comparée à une température seuil T_{S} définie au préalable. Si elle dépasse le seuil, la loi d'activation permettant la régulation de température est appliquée. Sinon, le cycle normal de combustion se poursuit.

Pour appauvrir le taux résiduel d'oxygène dans les gaz d'échappement, on peut aussi opérer un « basculement » de richesse (modification de la concentration en oxygène durant un intervalle très court), en agissant sur l'injection de carburant (par décalage dans le temps ou application d'injections supplémentaires par exemple), sur une vanne placée à l'admission, sur l'ouverture totale ou partielle d'un by-pass de la turbine placée à l'échappement du moteur (turbine qui permet de décharger le compresseur et donc d'agir sur le débit des gaz frais), etc., ces actions pouvant être combinées avec la variation du taux d'EGR.

## Revendications

1. Procédé pour contrôler la régénération périodique d'un filtre à particules (7) placé à l'échappement (2) d'un moteur thermique (1), de type diesel par exemple, par combustion des particules retenues dans le filtre, comprenant une mesure de la température (T) régnant dans le filtre à particules et une modulation du taux résiduel d'oxygène dans les gaz d'échappement pour que la température d'incinération mesurée (T) ne dépasse pas un plafond défini (T_{S}), dépendant de la résistance thermique du filtre à particules de manière à limiter sa dégradation, **caractérisé en ce qu'**on élargit la section de passage des gaz brûlés dans le filtre à particules par un élément diffuseur (8) disposé en tête dudit filtre, ce qui a pour effet d'étaler le flux de gaz brûlés sur toute sa section transversale et de l'homogénéiser, **en ce qu'**on module le taux résiduel d'oxygène dans les gaz d'échappement en agissant périodiquement sur le taux de gaz brûlés recyclés à l'admission du moteur par un circuit (3) de recirculation ajustable des gaz brûlés et sur des basculements périodiques de richesse à l'admission dudit moteur.

2. Système pour contrôler la régénération périodique d'un filtre à particules (7) placé à l'échappement (2) d'un moteur thermique (1), de type diesel par exemple, par incinération des particules retenues dans le filtre, comportant au moins une sonde (10) pour mesurer la température régnant en un point du filtre à particules (7), des moyens (6) de chauffage des gaz brûlés et des moyens de contrôle (5, 12) pour moduler le taux résiduel d'oxygène dans les gaz d'échappement pour que la température d'incinération mesurée (T) ne dépasse pas un plafond défini (T_{S}), dépendant de la résistance thermique du filtre à particules, de manière à limiter sa dégradation, **caractérisé en ce qu'**il comporte un élément diffuseur (8) disposé en tête du filtre à particules pour élargir la section de passage des gaz brûlés dans ledit filtre (7), pour limiter l'incidence de ladite modulation du taux résiduel d'oxygène sur l'efficacité de la régénération du filtre, **en ce que** les moyens de contrôle comportent un calculateur (5) adapté à moduler l'ouverture d'une vanne de recirculation (12) de gaz brûlés, associée à un circuit (3) de recirculation ajustable des gaz brûlés à l'admission du moteur, et à moduler la richesse de combustion à l'admission dudit moteur.

## Patentansprüche

1. Verfahren zur Steuerung der periodischen Regeneration eines am Auslaß (2) eines Wärmemotors (1), zum Beispiel von Dieseltyp, angeordneten Partikelfilters (7), durch Verbrennung der im Filter zurückgehaltenen Partikel, in welchem die in dem Partikelfilter herrschende Temperatur (T) gemessen und der Restsauerstoffgehalt im Abgas moduliert wird, so daß die gemessene Veraschungstemperatur (T) einen bestimmten Grenzwert (Tₛ) nicht überschreitet, abhängig von der Wärmebeständigkeit des Partikelfilters um seine Abnutzung zu beschränken, **dadurch gekennzeichnet, daß** der Durchgangsquerschnitt des Abgases in dem Partikelfilter durch ein am Kopf des besagten Filters angeordnetes Ausbreitungselement (8) vergrößert wird, so daß der Abgasstrom über den ganzen Querschnitt verteilt und homogenisiert wird, daß der Restsauerstoffgehalt im Abgas moduliert wird indem periodisch auf die zum Motoreinlaß mittels einer einstellbaren Abgasrückführleitung (3) zurückgeführene Abgasmenge und auf periodische Schwankungen des Gemischverhältnisses am Einlaß des besagten Motors eingewirkt wird.

2. System zur Steuerung der periodischen Regeneration eines am Auslaß (2) eines Wärmemotors (1), zum Beispiel von Dieseltyp, angeordneten Partikelfilters (7), durch Veraschung der im Filter zurückgehaltenen Partikel, bestehend aus wenigstens einem Temperaturfühler (10) zur Messung der an einer Stelle des Partikelfilters (7) herrschende Temperatur, Abgasheizmittel (6) und Steuermittel (5, 12) zur Modulation des Restsauerstoffgehalts im Abgas so daß die gemessene Veraschungstemperatur (T) einen bestimmten Grenzwert (Tₛ) nicht überschreitet, abhängig von der Wärmebeständigkeit des Partikelfilters um seine Abnutzung zu beschränken, **dadurch gekennzeichnet, daß** es ein am Kopf des Partikelfilters angeordnetes Ausbreitungselement (8) enthält um den Durchgangsquerschnitt des Abgases in dem besagten Filter (7) zu vergrößern, so daß die Auswirkung der besagten Modulation des Restsauerstoffgehalts auf die Filterregenerationswirksamkeit beschränkt wird, daß die Steuermittel einen Computer (5) zur Modulation der Öffnung eines Abgasrückführventils (12) enthalten, verbunden mit einer einstellbaren Abgasrückführleitung (3) am Motoreinlaß, und zur Modulation des Gemischverhältnisses am Einlaß des besagten Motors.

## Claims

1. A method for controlling periodic regeneration of a particle filter (7) located at the exhaust (2) of a thermal engine (1) of Diesel type for example, by combustion of the particles retained in the filter, comprising measurement of the temperature (T) prevailing in the particle filter and modulation of the residual oxygen ratio in the exhaust gas so that the measured incineration temperature (T) does not exceed a predetermined threshold (Tₛ), depending on the thermal resistance of the particle filter so as to limit degradation thereof, **characterized in that** the cross-section of flow of the burnt gas in the particle filter is widened by means of a diffusing element (8) arranged at the top of said filter, which has the effect of spreading the burnt gas flow over the total cross-section thereof and of homogenizing it, **in that** the residual oxygen ratio in the exhaust gas is modulated by acting periodically on the ratio of burnt gas recycled to the engine intake by means of an adjustable burnt gas recirculation circuit (3) and on periodic shifts in the fuel/air ratio at the intake of said engine.

2. A system for controlling periodic regeneration of a particle filter (7) located at the exhaust (2) of a thermal engine (1) of Diesel type for example, by incineration of the particles retained in the filter, comprising at least one pickup (10) for measuring the temperature prevailing at a point of particle filter (7), burnt gas heating means (6) and control means (5, 12) for modulating the residual oxygen ratio in the exhaust gas so that the measured incineration temperature (T) does not exceed a predetermined threshold (Tₛ), depending on the thermal resistance of the particle filter so as to limit degradation thereof, **characterized in that** it comprises a diffusing element (8) arranged at the top of the particle filter for widening the cross-section of flow of the burnt gas in said filter (7), to limit the incidence of said residual oxygen ratio modulation on the filter regeneration efficiency, **in that** the control means comprise a computer (5) suited to modulate opening of a burnt gas recirculation valve (12), associated with an adjustable burnt gas recirculation circuit (3) at the engine intake, and to modulate the fuel/air ratio at the intake of said engine.
